# EUROPEAN PATENT APPLICATION

(11) **EP 4 654 370 A1**
(43) Date of publication of application: **26.11.2025**
(21) Application number: 24917591.0
(22) Date of filing: 31.07.2024
(51) Int. Cl.: H01M 50/533

(54) **TAB CONNECTION STRUCTURE, BATTERY AND WELDING DETECTION SYSTEM**

(30) Priority: 11.04.2024 CN 202420749236 U
(71) Applicant: Eve Power Co., Ltd., Jingmen, Hubei 448000 (CN)
(72) Inventor: SONG, Shuaishuai, Jingmen, Hubei 448000 (CN); CHEN, Liquan, Jingmen, Hubei 448000 (CN); YUAN, Dingding, Jingmen, Hubei 448000 (CN); HE, Wei, Jingmen, Hubei 448000 (CN)
(74) Representative: Berggren Oy
(86) International application number: PCT/CN2024/108965
(87) International publication number: WO 2025/213636

(57) **Abstract**

The present application provides an electrode tab connecting structure, a battery, and a welding detection system. The electrode tab connecting structure includes a battery pin, and the battery pin includes an electrode terminal connecting portion and an electrode tab connecting portion. The electrode tab connecting portion includes a bent portion, a main body portion, and a connecting sub-portion. An outer side face, facing away from the main body portion and the connecting sub-portion, of the bent portion is arranged to be rounded. An outer circumference of a cross section of the bent portion is L1, a thickness of the main body portion (103) is L2, L1=aL2, a is a first coefficient, and π ≤ a < 10.

## Description

The present Application claims priority to Chinese Application No. 202420749236.4, filed to China National Intellectual Property Administration on April 11, 2024, the content of which is incorporated herein by reference in its entirety.

### TECHNICAL FIELD

The present application relates to the field of battery technology, and in particular to an electrode tab connecting structure, a battery, and a welding detection system.

### BACKGROUND

In related technologies, during an assembly process of a battery, a positive electrode tab of a cell pack and a negative electrode tab of the cell pack are respectively welded to a positive battery pin and a negative battery pin. During a welding process, the electrode tabs need to be welded to the battery pins first, and then the battery pins are bent. During a bending process, the battery pins are formed with vertically bent sections, which will result in an extension of current flow path and an increase in resistance.

### SUMMARY

Battery pins of a battery in related technologies have a problem of an extension in current flow path and an increase in resistance due to vertically bent sections.

In a first aspect, the present application provides an electrode tab connecting structure, including an electrode tab and a battery pin. The battery pin includes:
an electrode terminal connecting portion configured to be connected to an electrode terminal on a cover plate; and
an electrode tab connecting portion including a bent portion, a main body portion, and a connecting sub-portion; in which the main body portion is connected to the connecting sub-portion through the bent portion; the connecting sub-portion is bent at a side, facing away from the cell pack, of the main body portion; a side, facing away from the main body portion, of the connecting sub-portion is connected to the electrode tab; the main body portion is connected to the electrode terminal connecting portion; and an outer side face, facing away from the main body portion and the connecting sub-portion, of the bent portion is arranged to be rounded;
in which, an outer circumference of a cross section of the bent portion is L1, a thickness of the main body portion is L2, L1=aL2, a is a first coefficient, and π ≤ a < 10.

In a second aspect, the present application further provides a battery, including:
a cell pack;
a cover plate, on which an electrode terminal is arranged; and
an electrode tab connecting structure, in which the electrode terminal is electrically connected to the cell pack through the electrode tab connecting structure; the electrode tab connecting structure includes an electrode tab and a battery pin; the battery pin includes an electrode terminal connecting portion and an electrode tab connecting portion, and the electrode terminal connecting portion is configured to be connected to the electrode terminal on the cover plate; and the electrode tab connecting portion includes a bent portion, a main body portion, and a connecting sub-portion; the main body portion is connected to the connecting sub-portion through the bent portion; the connecting sub-portion is bent at a side, facing away from the cell pack, of the main body portion; a side, facing away from the main body portion, of the connecting sub-portion is connected to the electrode tab; the main body portion is connected to the electrode terminal connecting portion; and an outer side face, facing away from the main body portion and the connecting sub-portion, of the bent portion is arranged to be rounded;
in which, an outer perimeter of a cross section of the bent portion is L1, a thickness of the main body portion is L2, L1=aL2, a is a first coefficient, and π ≤ a < 10.

In a third aspect, the present application further provides a welding detection system configured to detect a battery, in which the battery includes a gap groove.

The welding detection system includes a temperature detection structure, and the temperature detection structure is configured to be mounted in the gap groove and is configured to detect a temperature during a welding process of the battery.

### BENEFICIAL EFFECTS

In the electrode tab connecting structure provided in the present application, the electrode terminal connecting portion is configured to be connected to an electrode terminal with one polarity on the cover plate, and the electrode tab connecting portion is configured to be connected to an electrode tab with one polarity on the cell pack. Specifically, the electrode tab connecting portion includes a bent portion, a main body portion, and a connecting sub-portion. The main body portion is connected to the connecting sub-portion through the bent portion. An outer side face, facing away from the main body portion and the connecting sub-portion, of the bent portion is arranged to be rounded and smooth, and an outer circumference of a cross section of the bent portion is L1, a thickness of the main body portion is L2, L1=aL2, a is the first coefficient, and π ≤ a < 10, so that the increase in resistance due to the vertically bent sections in related technologies can be reduced, thereby shortening the current flow path and improving a current flow capability.

### BRIEF DESCRIPTION OF THE DRAWINGS

FIG. 1 is a three-dimensional schematic diagram of a structure of a battery pin provided in some embodiments of the present application;
FIG. 2 is a bottom view of a structure of the battery pin in FIG. 1;
FIG. 3 is a three-dimensional schematic diagram of a structure of a battery provided in some embodiments of the present application; and
FIG. 4 is a cross sectional view taken along A-A in FIG. 3.

Reference numerals in the accompany drawings:
100: battery pin; 101: electrode terminal connecting portion; 102: electrode tab connecting portion; 103: main body portion; 104: connecting sub-portion; 105: first connecting sheet; 106: second connecting sheet; 107: first side edge; 108: second side edge; 109: third side edge; 110: bent portion;
1000: battery; 200: cover plate; 300: cell pack; 400: gap groove; 500: electrode tab; 501: first sub-electrode tab; 502: first accommodating groove; 503: second sub-electrode tab; 504: second accommodating groove.

### DETAILED DESCRIPTION

In related technologies, during an assembly process of a battery, a positive electrode tab of a cell pack and a negative electrode tab of the cell pack are welded and connected to a positive battery pin and a negative battery pin respectively. During a welding process, in a first stage, a connecting sub-portion is arranged perpendicular to a main body portion, and the electrode tab needs to be welded to the connecting sub-portion first; and in a second stage, the connecting sub-portion is bent 90° toward the main body portion to overlap the connecting sub-portion with the main body portion. During a bending process, the bent portion configured to connect the main body portion to the connecting sub-portion is formed with a first arc segment, a vertical segment perpendicular to the main body portion, and a second arc segment connected in sequence. Due to the vertical segment, the current flow path of the battery pin is extended, and the resistance is increased.

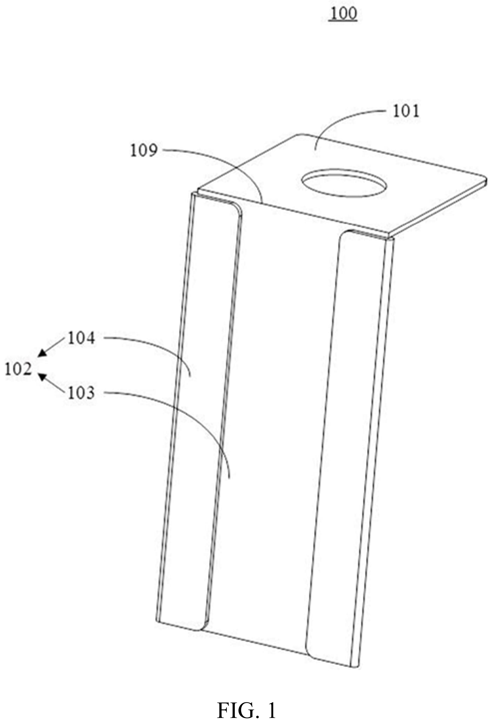

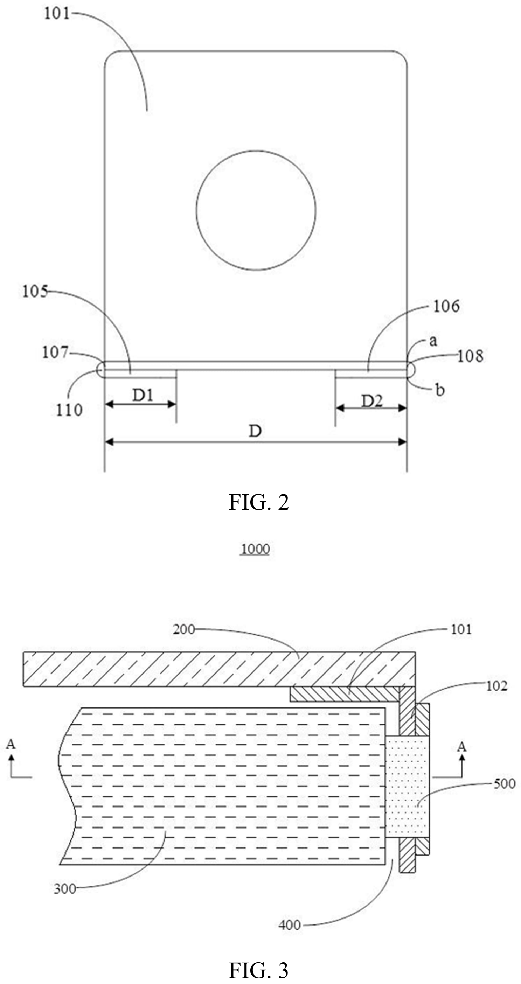

In view of this, the present application provides an electrode tab connecting structure. FIG. 1 and FIG. 2 are schematic diagrams of an embodiment of a structure of an electrode tab connecting structure provided in the present application. The electrode tab connecting structure provided in the present application is short in current flow path, low in internal resistance, and strong in current flow capability. The electrode tab connecting structure is described in detail in combination with the main drawings below.

Referring to FIG. 1 and FIG. 2, this embodiment provides an electrode tab connecting structure. The electrode tab connecting structure includes an electrode tab 500 and a battery pin 100. The battery pin 100 includes an electrode terminal connecting portion 101 and an electrode tab connecting portion 102. The electrode terminal connecting portion 101 is configured to be connected to an electrode terminal with one polarity on a cover plate 200. The electrode tab connecting portion 102 includes a main body portion 103, a bent portion 110, and a connecting sub-portion 104. The main body portion 103 is connected to the connecting sub-portion 104 through the bent portion 110. The connecting sub-portion 104 is bent at a side, facing away from the cell pack 300, of the main body portion 103. A side, facing away from the main body portion 103, of the connecting sub-portion 104 is configured to be connected to the electrode tab 500 on the cell pack 300. The main body portion 103 is connected to the electrode terminal connecting portion 101. An outer side face, facing away from the main body portion 103 and the connecting sub-portion 104, of the bent portion 110 is arranged to be rounded. An outer circumference of a cross section of the bent portion 110 is L1, a thickness of the main body portion 103 is L2, L1=aL2, a is a first coefficient, and π ≤ a < 10.

In the technical solution of the present application, the electrode terminal connecting portion 101 is configured to be connected to an electrode terminal with one polarity on the cover plate 200, and the electrode tab connecting portion 102 is configured to be connected to an electrode tab 500 with one polarity on the cell pack 300. Specifically, the electrode tab connecting portion 102 includes a main body portion 103 and a connecting sub-portion 104. The connecting sub-portion 104 is connected to the electrode tab 500 with one polarity on the cell pack 300 and is arranged on a side, facing away from the cell pack 300, of the main body portion 103. The main body portion 103 and the connecting sub-portion 104 form a double-layer structure.

In some embodiments, please continue to refer to FIG. 2. An outer side face of the bent portion 110 is of a rounded arc-shaped structure. The "rounded" mentioned in this embodiment refers to the removal of the vertical section perpendicular to the main body portion in related technologies. L1 is a length (that is, a length of arc ab in the drawings) of an arc from a corner of the main body portion 103 to a corner of the connecting sub-portion 104.

It should be noted that a size of the bent portion 110 will affect a magnitude of a resistance of the battery 1000. The longer the outer perimeter of the cross section of the bent portion 110, the larger the volume of the bent portion 110, and the longer the current flow path of the battery pin 100, the higher the resistance, and the larger the volume of the bent portion 110, the larger the space occupied by the battery pin 100. The shorter the outer perimeter of the cross section of the bent portion 110, the smaller the volume of the bent portion 110, resulting in a corresponding reduction in a size of the main body portion 103 and the connecting sub-portion for current to flow, a reduction in resistance, and the smaller the space occupied. It should be understood that the connecting sub-portion 104 of this embodiment is first bent 90° to overlap with the main body portion 103, and then the electrode tab 500 is welded to the connecting sub-portion 104. The bent portion 110 of this embodiment is only formed with a rounded arc-shaped structure, and the vertical section in related technologies is removed, so that L1=aL2, the circumference of the bent portion 110 is reduced, thereby shortening the current flow path, reducing a current flow resistance, and enhancing the current flow capability of the electrode tab connecting structure.

Please continue to refer to FIG. 1 and FIG. 2. The connecting sub-portion 104 includes a first connecting sheet 105 and a second connecting sheet 106. The first connecting sheet 105 and the second connecting sheet 106 are respectively stacked with the main body portion 103, and projections of the first connecting sheet 105 and the second connecting sheet 106 on the main body portion 103 are arranged at an interval. In this embodiment, the first connecting sheet 105 is stacked on the main body portion 103, and the second connecting sheet 106 is stacked on the main body portion 103, and the first connecting sheet 105 and the second connecting sheet 106 are arranged at an interval. More specifically, in order to ensure the stability of this structure, the first connecting sheet 105 and the second connecting sheet 106 are symmetrically arranged, with a simple structure and convenient processing. The first connecting sheet 105 and the second connecting sheet 106 are respectively stacked on the main body portion 103, so that the electrode tab connecting portion 102 is arranged in a double-layer structure, which increases a strength of the electrode tab connecting portion 102, and also avoids the electrode tab connecting portion 102 from being penetrated by laser during welding, resulting in ablation of the cell pack 300.

In some embodiments, please continue to refer to FIG. 1 and FIG. 2. The main body portion 103 includes a first side edge 107, a second side edge 108, and a third side edge 109. The first side edge 107 and the second side edge 108 are arranged opposite to each other, and the third side edge 109 is connected between the first side edge 107 and the second side edge 108. Specifically, considering the stability and manufacturability of the structure, the first connecting sheet 105 is connected to the first side edge 107, the second connecting sheet 106 is connected to the second side edge 108, and the third side edge 109 is connected to the electrode terminal connecting portion 101. As such, the battery pin 100 is of a symmetrical structure, which enhances the processability of the battery pin 100.

In some embodiments, the main body portion 103, the first connecting sheet 105, and the second connecting sheet 106 are integrally formed, the main body portion 103 is integrally bent and formed with the first connecting sheet 105, and the main body portion 103 is integrally bent and formed with the second connecting sheet 106. In actual application, the battery pin 100 includes a metal sheet, and the metal sheet includes a first portion, a second portion, and a third portion. The first portion and the third portion are connected to two sides of the second portion. The first portion is bent in a direction close to the second portion until the first portion overlaps with the second portion. Similarly, the third portion is bent in a direction close to the second portion until the third portion overlaps with the second portion. At this time, the first portion and the third portion are located on a same side of the second portion, and both the first portion and the third portion overlap with the second portion, thereby forming the electrode tab connecting portion 102. The first portion is formed as the first connecting portion, the second portion is formed as the main body portion 103, and the third portion is formed as the second connecting sheet 106.

In some embodiments, the electrode tab connecting portion 102 and the electrode terminal connecting portion 101 are integrally formed.

Please continue to refer to FIG. 2. The main body portion 103 is arranged between the cell pack 300 and the connecting sub-portion 104. Therefore, a size of the main body portion 103 is affected by the cell pack 300. Usually, considering space utilization, in order to avoid the problem of space waste, in a direction from the first side edge 107 to the second side edge 108, the size of the main body portion 103 is usually not greater than the size of the cell pack 300. In some embodiments, the size of the first connecting sheet 105 and the size of the second connecting sheet 106 are not greater than the size of the cell pack 300. Specifically, in this embodiment, the size of the first connecting sheet 105 is D1, the size of the second connecting sheet 106 is D2, and the size of the main body portion 103 is D, in which D1 = bD, D2 = cD, b is a second coefficient, 0.3 ≤ b ≤ 0.8, and c is a third coefficient, and 0.3 ≤ c ≤ 0.8.

In some embodiments, in the direction from the first side edge 107 to the second side edge 108, the size of the first connecting sheet 105 (that is, a length of the first connecting sheet 105) is 8 mm ~ 36 mm. Specifically, the size of the first connecting sheet 105 is 8 mm, 9 mm, 10 mm, 11 mm, 12 mm, 13 mm, 14 mm, 15 mm, 16 mm, 17 mm, 18 mm, 19 mm, 20 mm, 21 mm, 22 mm, 23 mm, 24 mm, 25 mm, 26 mm, 27 mm, 28 mm, 29 mm, 30 mm, 31 mm, 32 mm, 33 mm, 34 mm, 35 mm, or 36 mm. Within the above size range, both the strength of the connecting sheet of the electrode tab 500 and the space utilization are ensured.

In some embodiments, in the direction from the first side edge 107 to the second side edge 108, the size of the second connecting sheet 106 (that is, a length of the second connecting sheet 106) is 8 mm ~ 36 mm. The size of the second connecting sheet 106 is 8 mm, 9 mm, 10 mm, 11 mm, 12 mm, 13 mm, 14 mm, 15 mm, 16 mm, 17 mm, 18 mm, 19 mm, 20 mm, 21 mm, 22 mm, 23 mm, 24 mm, 25 mm, 26 mm, 27 mm, 28 mm, 29 mm, 30 mm, 31 mm, 32 mm, 33 mm, 34 mm, 35 mm, or 36 mm. Within the above size range, both the strength of the connecting sheet of the electrode tab 500 and the space utilization are ensured.

In some embodiments, in the direction from the first side edge 107 to the second side edge 108, the size of the main body portion 103 (that is, a length of the main body portion 103) is 15 mm ~ 72 mm. The size of the main body portion 103 is 15 mm, 16 mm, 17 mm, 18 mm, 19 mm, 20 mm, 22 mm, 24 mm, 26 mm, 28 mm, 30 mm, 32 mm, 34 mm, 36 mm, 38 mm, 40 mm, 42 mm, 44 mm, 46 mm, 48 mm, 50 mm, 52 mm, 54 mm, 56 mm, 58 mm, 60 mm, 62 mm, 64 mm, 66 mm, 68 mm, 70 mm, 71 mm, or 72 mm. Within the above size range, both the strength of the connecting sheet of the electrode tab 500 and the space utilization are ensured.

It should be noted that the battery pin 100 provided in the present application is used for a positive electrode of the battery 1000 or a negative electrode of the battery 1000, depending on the specific situation. Specifically, in some embodiments, in case that the battery pin 100 is configured to be connected to the positive electrode of the battery 1000, in a direction in which the connecting sub-portion 104 is stacked with the main body portion 103, the size of the main body portion 103 is H1; and in case that the battery pin 1000 is configured to be connected to the negative electrode of the battery 1000, in the direction in which the connecting sub-portion 104 is stacked with the main body portion 103, the size of the main body portion 103 is H2; in which H1 = dH2, d is a fourth coefficient, and 1 ≤ d ≤ 3. It should be noted that, considering the resistance and service life, the material of the main body portion 103 is varied in case that the battery pin 100 is used for different polarities. In this embodiment, in case that the battery pin 100 is configured to be connected to the positive electrode of the battery 1000, the material of the main body portion 103 is selected as aluminum; and in case that the battery pin 100 is configured to be connected to the negative electrode of the battery 1000, the material of the main body portion 103 is selected as copper or copper alloy. Due to the different materials selected, a thickness of the main body portion 103 is varied for different polarities. Specifically, for the positive electrode, the thickness of the main body portion 103 is H1, and for the negative electrode, the thickness of the main body portion 103 is H2. The size of the main body portion 103 for the positive electrode is 1 to 3 times the size of the main body portion 103 for the negative electrode. Within the above range, the resistance of the main body portion 103 is reduced, and the connecting strength of the main body portion 103 is ensured.

In some embodiments, in this embodiment, the battery pin 100 is configured to be connected to the positive electrode of the battery 1000. In the direction in which the connecting sub-portion 104 is stacked with the main body portion 103, the size of the first connecting sheet 105 (that is, a thickness of the first connecting sheet 105) is 0.5 mm ~ 2.0 mm. The thickness of the first connecting sheet 105 should not be too small or too large. If the thickness of the first connecting sheet 105 is too small, the thickness of the electrode tab connecting part 102 would be too small as a whole, which would lead to penetration welding during welding, resulting in ablation of the cell pack 300. If the thickness of the first connecting sheet 105 is too large, the size of the battery 1000 would increase, and the occupied space would increase. Specifically, the size of the first connecting sheet 105 is 0.5 mm, 0.6 mm, 0.7 mm, 0.8 mm, 0.9 mm, 1.0 mm, 1.1 mm, 1.2 mm, 1.3 mm, 1.4 mm, 1.5 mm, 1.6 mm, 1.7 mm, 1.8 mm, 1.9 mm, or 2.0 mm. Within the above size range, the connecting strength is ensured, penetration welding is avoided, and space utilization is ensured.

In some embodiments, the battery pin 100 is configured to be connected to the negative electrode of the battery 1000. In the direction in which the connecting sub-portion 104 is stacked with the main body portion 103, the size of the main body portion 103 is 0.3 mm ~ 1.7 mm. The thickness of the main body portion 103 should not be too small or too large. If the thickness of the main body portion 103 is too small, the thickness of the electrode tab connecting part 102 would be too small as a whole, which could lead to penetration welding during welding, resulting in ablation of the cell pack 300. If the thickness of the main body portion 103 is too large, the size of the battery 1000 would increase and the occupied space would increase. Specifically, the size of the main body portion 103 is 0.3 mm, 0.4 mm, 0.5 mm, 0.6 mm, 0.7 mm, 0.8 mm, 0.9 mm, 1.0 mm, 1.1 mm, 1.2 mm, 1.3 mm, 1.4 mm, 1.5 mm, 1.6 mm, or 1.7 mm. Within the above size range, the connecting strength is ensured, penetration welding is avoided, and space utilization is ensured.

Specifically, in case that the battery pin 100 is configured to be connected to the positive electrode of the battery 1000, in the direction in which the connecting sub-portion 104 is stacked with the main body portion 103, a size of the connecting sub-portion 104 is H3; and in case that the battery pin 100 is configured to be connected to the negative electrode of the battery 1000, in the direction in which the connecting sub-portion 104 is stacked with the main body portion 103, the size of the connecting sub-portion 104 is H4; in which H3 = eH4, e is a fifth coefficient, and 1 ≤ e ≤ 3. It should be noted that, considering the resistance and service life, the material of the connecting sub-portion 104 is varied in case that the battery pin 100 is used for different polarities. In this embodiment, in case that the battery pin 100 is configured to be connected to the positive electrode of the battery 1000, the material of the connecting sub-portion 104 is selected as aluminum, and in case that the battery pin 100 is configured to be connected to the negative electrode of the battery 1000, the material of the connecting sub-portion 104 is selected as copper or copper alloy. Due to the different materials selected, a thickness of the connecting sub-portion 104 is varied for different polarities. Specifically, for the positive electrode, the thickness of the connecting sub-portion 104 is H3, and for the negative electrode, the thickness of the connecting sub-portion 104 is H4. The size of the connecting sub-portion 104 for the positive electrode is 1 to 3 times the size of the connecting sub-portion 104 for the negative electrode. Within the above range, the resistance of the connecting sub-portion 104 is reduced, and the connecting strength of the connecting sub-portion 104 is ensured.

In some embodiments, the battery pin 100 is configured to be connected to the positive electrode of the battery 1000. In the direction in which the connecting sub-portion 104 is stacked with the main body portion 103, the size of the second connecting sheet 106 (that is, a thickness of the second connecting sheet 106) is 0.5 mm ~ 2.0 mm. A thickness of the second connecting sheet 106 should not be too small or too large. If the thickness of the second connecting sheet 106 is too small, the thickness of the electrode tab connecting part 102 would be too small as a whole, which would lead to penetration welding during welding, resulting in ablation of the cell pack 300. If the thickness of the second connecting sheet 106 is too large, the size of the battery 1000 would increase, and the occupied space would increase. Specifically, the size of the second connecting sheet 106 is 0.5 mm, 0.6 mm, 0.7 mm, 0.8 mm, 0.9 mm, 1.0 mm, 1.1 mm, 1.2 mm, 1.3 mm, 1.4 mm, 1.5 mm, 1.6 mm, 1.7 mm, 1.8 mm, 1.9 mm, or 2.0 mm. Within the above size range, the connecting strength is ensured, penetration welding is avoided, and space utilization is ensured.

In some embodiments, in case that the battery pin 100 is configured to be connected to the negative electrode of the battery 1000, in the direction in which the connecting sub-portion 104 is stacked with the main body portion 103, a size of the first connecting sheet 105 (a thickness of the first connecting sheet 105) is 0.3 mm ~ 1.7 mm. Specifically, a thickness of the first connecting sheet 105 is 0.3 mm, 0.4 mm, 0.5 mm, 0.6 mm, 0.7 mm, 0.8 mm, 0.9 mm, 1.0 mm, 1.1 mm, 1.2 mm, 1.3 mm, 1.4 mm, 1.5 mm, 1.6 mm, or 1.7 mm. A size of the second connecting sheet 106 (that is, the thickness of the second connecting sheet 106) is 0.3 mm ~ 1.7 mm. Specifically, the thickness of the second connecting sheet 106 is 0.3 mm, 0.4 mm, 0.5 mm, 0.6 mm, 0.7 mm, 0.8 mm, 0.9 mm, 1.0 mm, 1.1 mm, 1.2 mm, 1.3 mm, 1.4 mm, 1.5 mm, 1.6 mm, or 1.7 mm. A size of the main body portion 103 (that is, a thickness of the main body portion 103) is 0.3 mm ~1.7 mm. Specifically, a thickness of the main body portion 103 is 0.3 mm, 0.4 mm, 0.5 mm, 0.6 mm, 0.7 mm, 0.8 mm, 0.9 mm, 1.0 mm, 1.1 mm, 1.2 mm, 1.3 mm, 1.4 mm, 1.5 mm, 1.6 mm, or 1.7 mm.

In some embodiments, the material of the electrode tab connecting portion 102 includes aluminum, copper, or copper-aluminum alloy. Specifically, in case that the battery pin 100 is configured for the positive electrode of the battery 1000, the material of the electrode tab connecting portion 102 is selected as aluminum; and in case that the battery pin 100 is configured for the negative electrode of the battery 1000, the material of the electrode tab connecting portion 102 is selected as copper or copper-aluminum alloy.

In some embodiments, in order to facilitate mounting, the main body portion 103, the bent portion 110, and the connecting sub-portion 104 are integrally formed. Specifically, in some embodiments, a metal sheet of proper size is selected as the electrode tab connecting portion 102. The metal sheet is placed on a bending machine, and two ends of the metal sheet are bent according to size and process requirements by the bending machine, thereby achieving integrated bending and forming.

In some embodiments, in order to ensure the connecting strength between the connecting sub-portion 104 and the main body portion 103, and to avoid the connecting sub-portion 104 from bouncing up in a direction away from the main body portion 103, the connecting sub-portion 104 is fixedly connected to the main body portion 103. In some embodiments, in order to increase the connecting strength, the connecting sub-portion 104 is welded to the main body portion 103.

The electrode tab 500 is welded to the connecting sub-portion 104. In some embodiments, in order to improve mounting efficiency, the electrode tab 500 is welded to the connecting sub-portion 104 and the main body portion 103 through a same welding seam. It should be understood that after the connecting sub-portion 104 is bent to the main body portion 103, the electrode tab 500 is welded to the connecting sub-portion 104 through laser welding. Meanwhile, the connecting sub-portion 104 is welded to the main body portion 103 through the heat generated during laser welding, which not only does not affect the structural strength of the battery pin 100, but also improves mounting efficiency.

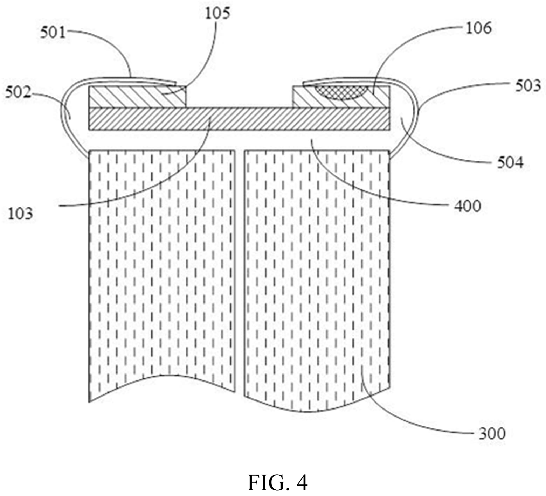

The present application further provides a battery 1000. Please refer to FIG. 3 and FIG. 4. The battery 1000 includes a cover plate 200, a cell pack 300, and an electrode tab connecting structure. The battery pin 100 is configured to connect the cell pack 300 to an electrode terminal on the cover plate 200. The battery pin 100 includes an electrode terminal connecting portion 101 and an electrode tab connecting portion 102. The electrode terminal connecting portion 101 is configured to be connected to an electrode terminal with one polarity on the cover plate 200. The electrode tab connecting portion 102 includes a main body portion 103 and a connecting sub-portion 104. The connecting sub-portion 104 is arranged on a side, facing away from the cell pack 300, of the main body portion 103. A side, facing away from the main body portion 103, of the connecting sub-portion 104 is configured to be connected to an electrode tab 500 on the cell pack 300. The main body portion 103 is connected to the electrode terminal connecting portion 101, and the main body portion 103 extends to a side facing away from the connecting sub-portion 104.

Please refer to FIG. 3 and FIG. 4. In some embodiments, a gap groove 400 is formed between the main body portion 103 and the cell pack 300. The gap groove 400 is configured to reduce a risk of damage to the cell pack 300 during welding. Meanwhile, the gap groove 400 is configured to accommodate a temperature detection structure. During a welding process, the temperature detection structure is first placed in the gap groove 400, and then welding is performed. During the welding process, changes in temperature of the battery 1000 are monitored at all times to avoid excessive temperature. After the welding is completed, the temperature detection structure is removed from the gap groove 400.

Specifically, a size of the gap groove 400 is designed based on the capacity density and assembly process of the cell pack 300. Specifically, in the direction from the main body portion 103 to the cell pack 300, the size of the gap groove 400 is 0.5 mm ~ 4.5 mm. More specifically, the size of the gap groove 400 is 0.5 mm, 0.6 mm, 0.7 mm, 0.8 mm, 0.9 mm, 1.0 mm, 1.2 mm, 1.4 mm, 1.6 mm, 1.8 mm, 2.0 mm, 2.5 mm, 3.0 mm, 3.5 mm, 3.6 mm, 3.7 mm, 3.8 mm, 3.9 mm, 4.0 mm, 4.1 mm, 4.2 mm, 4.3 mm, 4.4 mm, or 4.5 mm, which is selected according to the actual situation.

In some embodiments, the battery 1000 further includes an electrode tab 500, and the electrode tab 500 includes a first sub-electrode tab 501 and a second sub-electrode tab 503. Specifically, one end of the first sub-electrode tab 501 is connected to the cell pack 300. More specifically, one end of the first sub-electrode tab 501 is ultrasonically welded to the cell pack 300, or the first sub-electrode tab 501 is a full electrode tab or a notched electrode tab, which is integrally formed on an uncoated area of the electrode sheet of the cell pack 300. Another end of the first sub-electrode tab 501 is bent in a direction close to the second sub-electrode tab 503 to form a first accommodating groove 502 between the cell pack 300 and the first sub-electrode tab. One end of the second sub-electrode tab 503 is ultrasonically welded to the cell pack 300, or the second sub-electrode tab 503 is a full electrode tab or a notched electrode tab, which is integrally formed on the uncoated area of the electrode sheet of the cell pack 300. Another end is bent in the direction close to the first sub-electrode tab 501 to form a second accommodating groove 504 between the cell pack 300 and the second sub-electrode tab. The first accommodating groove 502 and the first accommodating groove 502 are configured to accommodate the electrode tab connecting portion 102 together.

In some embodiments, the electrode tab connecting portion 102 is first mounted on the cell pack 300, so that the first connecting sheet 105 is located in the first accommodating groove 502. The second connecting sheet 106 is located in the second accommodating groove 504, and the main body portion 103 is arranged at an interval with the cell pack 300. Subsequently, through laser welding, the first connecting sheet 105 is welded to the first sub-electrode tab 501, and the second connecting sheet 106 is welded to the second sub-electrode tab 503, thereby completing the connection between the electrode tab connecting portion 102 and the electrode tab 500 with one polarity on the cell pack 300.

It should be noted that, in this embodiment, the first sub-electrode tab 501 includes multiple first electrode tab layers, and the multiple first electrode tab layers are stacked. The multiple first electrode tab layers are subjected to serrated-tooth welding and shaping through ultrasonic flat-tooth.

In some embodiments, the second sub-electrode tab 503 includes multiple second electrode tab layers, and the multiple second electrode tab layers are stacked. The multiple second electrode tab layers are serrated-tooth welded and shaped through ultrasonic flat-tooth.

The present application further provides a welding detection system configured to detect a battery 1000. The battery 1000 includes a gap groove 400.

Specifically, the welding detection system includes a temperature detection structure. The temperature detection structure is configured to be mounted in the gap groove 400 and configured to detect a temperature of the battery 1000 during the welding process.

The welding detection system further includes a visual detection device. The visual detection device is configured to collect photos of the battery 1000 during the welding process. During the welding process, the visual detection device takes photos of the battery 1000 for detection, and detects poor welding conditions, thereby achieving 100% effective detection of poor welding of the cell pack 300 and avoiding defective products.

## Claims

1. A electrode tab connecting structure, comprising an electrode tab (500) and a battery pin (100), the battery pin (100) comprising:
an electrode terminal connecting portion (101) configured to be connected to an electrode terminal on a cover plate (200); and
an electrode tab connecting portion (102) comprising a main body portion (103), a bent portion (110), and a connecting sub-portion (104); the main body portion (103) being connected to the connecting sub-portion (104) through the bent portion (110); the connecting sub-portion (104) being bent at a side, facing away from the cell pack (300), of the main body portion (103); a side, facing away from the main body portion (103), of the connecting sub-portion (104) being configured to be connected to the electrode tab (500); the main body portion (103) being connected to the electrode terminal connecting portion (101); and an outer side face, facing away from the main body portion (103) and the connecting sub-portion (104), of the bent portion (110) being arranged to be rounded;
wherein, an outer circumference of a cross section of the bent portion (110) is L1, a thickness of the main body portion (103) is L2, L1=aL2, a is a first coefficient, and π ≤ a < 10.

2. The electrode tab connecting structure of claim 1, wherein the connecting sub-portion (104) comprises a first connecting sheet (105) and a second connecting sheet (106); the first connecting sheet (105) and the second connecting sheet (106) are respectively stacked with the main body portion (103); and projections of the first connecting sheet (105) and the second connecting sheet (106) on the main body portion (103) are arranged at an interval; and
the main body portion (103) comprises a third side edge (109), as well as a first side edge (107) and a second side edge (108) arranged opposite to each other; the first connecting sheet (105) is connected to the first side edge (107), the second connecting sheet (106) is connected to the second side edge (108), the third side edge (109) is connected between the first side edge (107) and the second side edge (108), and the third side edge (109) is connected to the electrode terminal connecting portion (101).

3. The electrode tab connecting structure of claim 2, wherein in a direction from the first side edge (107) to the second side edge (108), a size of the first connecting sheet (105) is D1, a size of the second connecting sheet (106) is D2, and a size of the main body portion (103) is D, wherein D1 = bD, D2 = cD, b is a second coefficient, 0.3 ≤ b ≤ 0.8, and c is a third coefficient, and 0.3 ≤ c ≤ 0.8.

4. The electrode tab connecting structure of claim 3, wherein 15 mm ≤ D ≤ 72 mm, 8 mm ≤ D1 ≤ 36 mm, and 8 mm ≤ D2 ≤ 36 mm.

5. The electrode tab connecting structure of claim 2, wherein in case that the battery pin (100) is configured to be connected to a positive electrode of a battery (1000), in a direction where the connecting sub-portion (104) is stacked with the main body portion (103), a size of the main body portion (103) is H1; and in case that the battery pin (100) is configured to be connected to a negative electrode of the battery (1000), in the direction where the connecting sub-portion (104) is stacked with the main body portion (103), a size of the main body portion (103) is H2; wherein H1 = dH2, d is a fourth coefficient, and 1 ≤ d ≤ 3.

6. The electrode tab connecting structure of claim 5, wherein 0.5 mm ≤ H1 ≤ 2 mm, and 0.3 mm ≤ H2 ≤ 1.7 mm.

7. The electrode tab connecting structure of claim 2, wherein in case that the battery pin (100) is configured to be connected to a positive electrode of a battery (1000), in a direction where the connecting sub-portion (104) is stacked with the main body portion (103), a size of the connecting sub-portion (104) is H3; and in case that the battery pin (100) is configured to be connected to a negative electrode of the battery (1000), in the direction where the connecting sub-portion (104) is stacked with the main body portion (103), a size of the connecting sub-portion (104) is H4; wherein H3 = eH4, e is a fifth coefficient, and 1 ≤ e ≤ 3.

8. The electrode tab connecting structure of claim 7, wherein 0.5 mm ≤ H3 ≤ 2 mm, and 0.3 mm ≤ H4 ≤ 1.7 mm.

9. The electrode tab connecting structure of any one of claims 1 to 8, wherein the main body portion (103), the bent portion (110), and the connecting sub-portion (104) are integrally bent and formed.

10. The electrode tab connecting structure of any one of claims 1 to 8, wherein the main body portion (103) is welded to the connecting sub-portion (104).

11. The electrode tab connecting structure of claim 10, wherein the main body portion (103) and the connecting sub-portion (104) are welded to the electrode tab through a same welding seam.

12. A battery, comprising:
a cell pack (300);
a cover plate (200), an electrode terminal being arranged on the cover plate (200); and
the electrode tab connecting structure of any one of claims 1 to 11, the electrode terminal (500) being electrically connected to the cell pack (300) through the electrode tab connecting structure.

13. The battery of claim 12, wherein a gap groove (400) is formed between the main body portion (103) and the cell pack (300), and the gap groove (400) is configured to accommodate a temperature detection structure.

14. The battery of claim 12 or 13, wherein in a direction from the main body portion (103) to the cell pack (300), a size of the gap groove (400) is 0.5 mm ~ 4.5 mm.

15. A welding detection system, being configured to detect the battery (1000) of claim 12, the battery (1000) comprising a gap groove (400);
the welding detection system comprising a temperature detection structure, the temperature detection structure being configured to be mounted in the gap groove (400) and configured to detect a temperature of the battery (1000) during a welding process.

16. The welding detection system of claim 15, further comprising a visual detection device, the visual detection device is configured to collect photos of the battery (1000) during the welding process.
